# FASCICULE DE BREVET EUROPEEN

(11) **EP 2 104 016 B1**
(45) Date de publication et mention de la délivrance du brevet: **16.05.2012**
(21) Numéro de dépôt: 09305076.3
(22) Date de dépôt: 28.01.2009
(51) Int. Cl.: G05D 23/27, F24H 9/20

(54) **Appareil de chauffage électrique comportant un capteur infrarouge**
Elektrische Heizvorrichtung mit einem Infrarotsensor
Electric heating device comprising an infrared sensor

(30) Priorité: 21.03.2008 FR 0801582
(43) Date de publication de la demande: 23.09.2009
(73) Titulaire: Atlantic Industrie, 85000 La Roche sur Yon (FR)
(72) Inventeur: Bony, Yves, 85170 Dompierre sur Yon (FR)
(74) Mandataire: Laget, Jean-Loup

(56) Documents cités:
- EP-A- 1 406 374
- DE-A1- 3 733 294
- DE-A1- 4 135 086
- FR-A- 2 870 362
- FR-A1- 2 592 945

## Description

L'invention est relative à un appareil de chauffage électrique comportant au moins un élément chauffant, du type comportant un boîtier portant des organes de commande et de régulation reliées à une carte électronique recevant un signal représentatif d'une température transmis par un capteur correspondant.

Pour le chauffage des logements, bureaux ou autres locaux habités, on utilise des appareils de chauffage électrique comportant un thermostat de régulation relié à un capteur mesurant une température d'air. Ce capteur est habituellement placé en partie basse de l'appareil de chauffage électrique, et mesure de ce fait la température de l'air ambiant au niveau du sol avant son réchauffement par l'élément chauffant de l'appareil de chauffage électrique. Le thermostat de régulation comporte un boîtier de commande portant des organes de régulation et de commande, du genre interrupteur marche/arrêt, molette de réglage de température, commutateur de modes de fonctionnement... Ce boîtier de commande est placé, de manière ergonomique, dans la partie supérieure, en haut de l'appareil de chauffage électrique.

Dans ce cas, le capteur de sonde de température en partie basse doit être relié au boîtier de commande en partie haute par un moyen de communication constitué par un câble électrique à double isolation, appelé "câble de sonde".

Le capteur ou sonde de température doit également, en pratique, être protégé par un petit boîtier ou une séparation interne à l'appareil de chauffage électrique.

Cependant, cette technologie connue présente plusieurs inconvénients : d'une part, la température d'air mesurée par le capteur ou sonde de température n'est pas représentative de l'ambiance thermique du local chauffé ; d'autre part, l'exigence d'une liaison par "câble de sonde" et d'un petit boîtier de protection de la sonde ou capteur de température renchérit la fabrication et complique le montage d'un appareil de chauffage électrique.

Le document DE 4135086 (INTERCONTROL KOEHLER HERMANN) décrit un boîtier mural de thermostat sans moyen de chauffage, comportant un capteur de température infrarouge orienté vers une cible intermédiaire proche, pour réduire les parasites qui perturbent facilement les signaux de très faible niveau du capteur.

Un premier but de l'invention est d'améliorer la régulation d'un appareil de chauffage électrique, en mesurant une température ambiante moyenne représentative du confort ambiant.

Un deuxième but de l'invention est de permettre une liaison directe entre capteur de température et boîtier de commande, en éliminant le câble de sonde reliant le boîtier de commande au capteur de température.

Un troisième but de l'invention est de réaliser un thermostat par intégration sur une carte électronique, de manière à réaliser une fabrication et un montage économiques d'un dispositif selon l'invention.

Un quatrième but de l'invention est de mesurer une valeur physique moyenne représentative de la température de l'air, mais aussi de la température rayonnée par une paroi visée de l'habitation telle que mur ou plafond, de manière à intégrer ainsi la notion de radiance de paroi froide.

L'invention a pour objet un appareil de chauffage électrique comportant au moins un élément chauffant, du type comportant un boîtier portant des organes de commande et de régulation reliées à une carte électronique recevant un signal représentatif d'une température transmis par un capteur correspondant, caractérisé par le fait que le capteur de température est un capteur infrarouge monté directement sur la carte électronique de l'appareil et orienté vers une fenêtre ou ouverture de saisie du rayonnement infrarouge ambiant, pratiquée dans le boîtier, pour permettre au capteur infrarouge de température de mesurer une température ambiante moyenne représentative du confort ambiant et par le fait que l'ouverture de saisie du rayonnement infrarouge est orientée en direction d'une paroi ou d'une surface étendue.

Selon d'autres caractéristiques alternatives de l'invention :
- le capteur infrarouge de température est un composant programmable à plusieurs fonctions de sortie ;
- le capteur infrarouge de température comporte une fonction de sortie "tout ou rien à hystérésis", pour effectuer une régulation de température simple et économique ;
- le capteur infrarouge de température comporte une fonction de sortie PWM des températures visée et ambiante ;
- le capteur infrarouge de température comporte une fonction de sortie «bus série» des températures visée et ambiante" ;
- le capteur de température infrarouge est relié à un microcontrôleur de la carte électronique, pour effectuer une programmation de la régulation de température.

L'appareil de chauffage électrique comportant au moins un élément chauffant selon l'invention est avantageusement du type dont la marche est commandée par un thermostat. De préférence, ce thermostat est monté dans la partie supérieure haute de l'appareil de chauffage.

L'invention sera mieux comprise grâce à la description qui va suivre donnée à titre d'exemple non limitatif en référence aux dessins annexés dans lesquels :
La figure 1 représente schématiquement un appareil de chauffage électrique selon l'invention ;
La figure 2 représente schématiquement un circuit électronique pour dispositif selon l'invention ;
La figure 3 représente schématiquement un circuit intégré constituant un capteur de température pour dispositif selon l'invention.

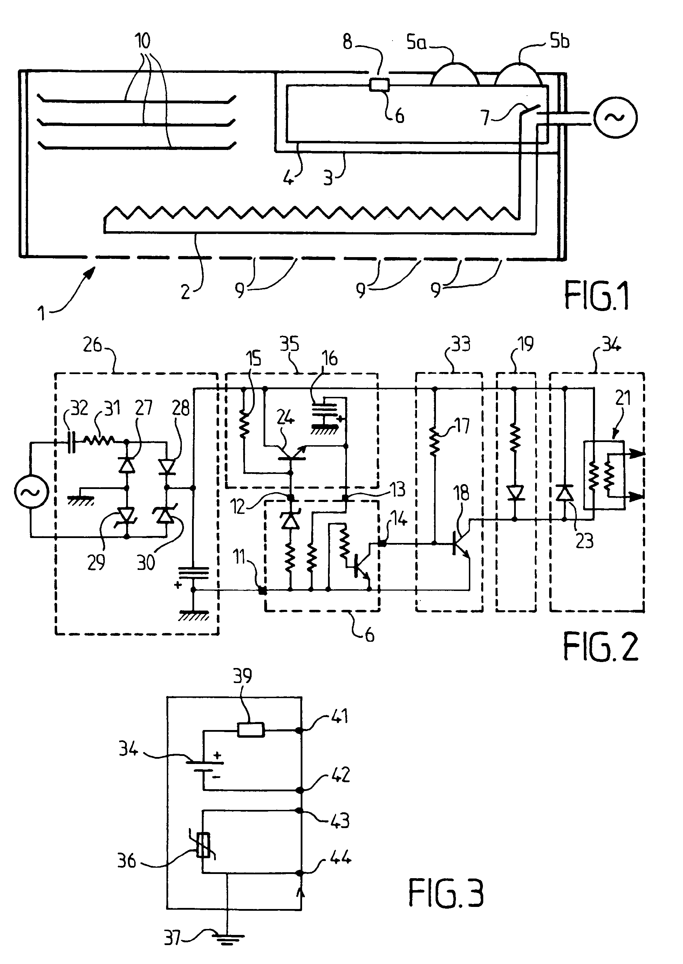

Sur la figure 1, un appareil 1 de chauffage électrique selon l'invention comporte au moins un élément chauffant 2 apte à être alimenté par l'alimentation électrique du secteur et un dispositif selon l'invention formant thermostat de régulation.

Le dispositif selon l'invention comporte un boîtier 3 contenant une carte électronique 4 regroupant l'ensemble des moyens de comparaison, d'amplification, et de programmation ou de calcul pour la régulation du chauffage électrique.

La carte électronique 4 peut notamment porter un moyen 5a de réglage de température, un moyen 5b de commutation de modes de fonctionnement et un moyen 7 de commutation de l'alimentation électrique de l'élément chauffant 2.

Selon l'invention, la carte électronique 4 porte un capteur infrarouge 6 monté et assemblé directement à la carte électronique 4.

Le capteur infrarouge 6 est orienté en direction d'une fenêtre ou ouverture 8 pratiquée dans le boîtier 3, pour permettre de mesurer la température ambiante moyenne représentative du confort ambiant.

La fenêtre 8 est orientée de préférence vers une paroi telle qu'un mur ou une autre surface étendue permettant d'obtenir une moyenne stable des mesures de température.

L'appareil électrique selon l'invention comporte en partie basse des ouvertures 9 d'admission d'air froid à réchauffer, et des ailettes 10 de diffusion d'air réchauffé vers le haut et vers l'avant de l'appareil de chauffage électrique selon l'invention.

Sur la figure 2, un mode de réalisation simple et économique de dispositif selon l'invention comporte un circuit électronique construit autour d'un capteur infrarouge 6 de température à quatre sorties.

Le montage électronique est conçu pour réaliser une fonction de sortie "tout ou rien avec hystérésis", pour effectuer une régulation de température simple et économique.

Le capteur 6 comporte une première borne 11 reliée à la masse, une deuxième sortie 12 reliée au bloc 35 composé des elements 15,16,24 pour réaliser une alimentation stabilisée disponible sur une troisième borne 13 et une quatrième sortie 14 reliée à une résistance 17 et à un transistor 18 pour piloter un bloc d'indication 19 et le bloc 34 de commande de l'élément chauffant .

Le bloc d'indication 19 comporte une diode électroluminescente 20 et une résistance 22.

Le bloc de commande 34 est constitué d'une diode 23 et d'un relais 21 de puissance électrique, pour alimenter ou non l'élément chauffant 2 de l'appareil de chauffage électrique selon l'invention.

Un bloc 33 comportant la résistance 17 et le transistor 18 sert d'amplification entre le capteur 6 et les blocs de sorties d'indication 19 et de commande 33.Le circuit 26 assure la transformation de la tension secteur alternative en une tension continue. Il comporte un pont constitué par deux diodes 27 et 28 et deux diodes Zener 29 et 30, une résistance 31 et une capacité 32 .

Sur la figure 3, un capteur infrarouge de température pour dispositif selon l'invention est réalisé sous forme de circuit intégré, comportant une photopile 38 et une résistance 39 montées en série sur un circuit reliant les bornes de connexion 41 et 42 et comportant un thermistor PTC 36 (à coefficient de température positif) sur un circuit reliant la borne de connexion 43 à la borne de connexion 44 reliée à la masse 37.

Les capteurs infrarouges de température pour dispositif selon l'invention, de préférence réalisée sous forme intégrée, peuvent également jouer le rôle de composants programmables à plusieurs fonctions de sortie, notamment la fonction de sortie "tout ou rien avec hystérésis" décrite en référence à la figure 2.

Avantageusement, un capteur infrarouge de température pour dispositif selon l'invention comporte une fonction de sortie "bus série des températures visée et ambiante", ainsi qu'une fonction de sortie PWM de "modulation de largeur d'impulsion des températures visée et ambiante", ces fonctions permettant la coopération avec un microcontrôleur non représenté de la carte électronique, pour effectuer une programmation de la régulation de température.

Grâce à l'invention, le thermostat de régulation forme un ensemble complet intégrant le capteur de température et peut être monté en toute position désirée de l'appareil de chauffage électrique, de préférence en position haute, mais également latéralement, ou éventuellement en position basse.

## Revendications

1. Appareil (1 ) de chauffage électrique comportant au moins un élément chauffant (2), du type comportant un boîtier (3) portant des organes (5a, 5b, 7) de commande et de régulation reliées à une carte électronique (4) recevant un signal représentatif d'une température transmis par un capteur correspondant, **caractérisé en** combinaison par le fait que le capteur de température est un capteur (6) infrarouge monté directement sur la carte électronique (4) de l'appareil et orienté vers une fenêtre (8) ou ouverture de saisie du rayonnement infrarouge ambiant, pratiquée dans le boîtier (3), pour permettre au capteur (6) infrarouge de température de mesurer une température ambiante moyenne représentative du confort ambiant, et par le fait que la fenêtre ou ouverture (8) de saisie du rayonnement infrarouge est orientée en direction d'une paroi ou d'une surface étendue .

2. Appareil de chauffage électrique selon la revendication 1, **caractérisé par le fait que** le capteur (6) infrarouge de température est un composant programmable à plusieurs fonctions de sortie.

3. Appareil de chauffage électrique selon la revendication 1, **caractérisé par le fait que** le capteur (6) infrarouge de température comporte une fonction de sortie "tout ou rien à hystérésis", pour effectuer une régulation de température simple et économique.

4. Appareil de chauffage électrique selon la revendication 1, **caractérisé par le fait que** le capteur (6) infrarouge de température comporte une fonction de sortie PWM des températures visée et ambiante.

5. Appareil de chauffage électrique selon la revendication 1, **caractérisé par le fait que** le capteur (6) infrarouge de température comporte une fonction de sortie « bus série » des températures visée et ambiante.

6. Appareil de chauffage électrique selon la revendication 1, **caractérisé par le fait que** le capteur (6) de température infrarouge est relié à un microcontrôleur de la carte électronique (4), pour effectuer une programmation de la régulation de température.

7. Appareil de chauffage électrique selon la revendication 1, comportant au moins un élément chauffant (2) dont la marche est commandée par un thermostat.

8. Appareil (1) de chauffage électrique selon la revendication 7, **caractérisé par le fait que** le thermostat est monté dans la partie supérieure de l'appareil de chauffage.

## Claims

1. An electric heating appliance (1) including at least one heating element (2) of the type including a casing (3) bearing control and regulation units (5a, 5b) connected to an electronic board (4) receiving a signal representative of a temperature, transmitted by a corresponding sensor, **characterized** as a combination by the fact that the temperature sensor is an infrared sensor (6) directly mounted on the electronic board (4) of the appliance and oriented towards a window (8) or aperture for capturing ambient infrared radiation, made in the casing (3), in order to allow the temperature infrared sensor (6) to measure an average ambient temperature representative of ambient comfort, and by the fact that the window or aperture (8) for capturing infrared radiation is oriented in the direction of the a wall or an extensive surface.

2. The electric heating appliance according to claim 1, **characterized by** the fact that the temperature infrared sensor (6) is a programmable component with several output functions.

3. The electric heating appliance according to claim 1, **characterized by** the fact that the temperature infrared sensor (6) includes an "on/off" output function with hysteresis, for carrying out simple and economical temperature regulation.

4. The electric heating appliance according to claim 1, **characterized by** the fact that the temperature infrared sensor (6) includes a function for PWM output of the targeted and ambient temperatures.

5. The electric heating appliance according to claim 1, **characterized by** the fact that the temperature infrared sensor (6) includes a function for "serial bus" output of the targeted and ambient temperatures.

6. The electric heating appliance according to claim 1, **characterized by** the fact that the temperature infrared sensor (6) is connected to a microcontroller of the electronic card (4), in order to carry out the programming of the temperature regulation.

7. The electric heating appliance according to claim 1, including at least one heating element (2), the operation of which is controlled by a thermostat.

8. The electric heating appliance (1) according to claim 7, **characterized by** the fact that the thermostat is mounted in the upper portion of the heating appliance.

## Patentansprüche

1. Elektrisches Heizgerät, das mindestens ein Heizelement (2) der Bauart aufweist, die ein Gehäuse (3) aufweist, das Steuer- und Regelorgane (5a, 5b, 7) trägt, die mit einer elektronischen Karte (4) verbunden sind, die ein jeweiliges Signal einer Temperatur empfängt, das von einem entsprechenden Sensor übertragen wird, **gekennzeichnet** in Kombination **dadurch**, dass der Temperatursensor ein Infrarotsensor (6) ist, der direkt auf der elektronischen Karte (4) des Geräts montiert ist und zu einem Erfassungsfenster (8) oder -öffnung der umgebenden Infrarotstrahlung ausgerichtet ist, das/die in das Gehäuse (3) eingearbeitet ist, um dem Infrarot-Temperatursensor (6) zu ermöglichen, eine Raumtemperatur zu messen, die für den Raumkomfort repräsentativ ist, und **dadurch**, dass das Erfassungsfenster oder -öffnung (8) der Infrarotstrahlung in Richtung einer Wand oder einer ausgedehnten Fläche ausgerichtet ist.

2. Elektrisches Heizgerät nach Anspruch 1, **dadurch gekennzeichnet, dass** der Infrarot-Temperatursensor (6) ein programmierbares Bauteil mit mehreren Ausgangsfunktionen ist.

3. Elektrisches Heizgerät nach Anspruch 1, **dadurch gekennzeichnet, dass** der Infrarot-Temperatursensor (6) eine "Hysterese-Alles-oder-Nichts"-Ausgangsfunktion aufweist, um eine einfache und wirtschaftliche Temperaturregelung durchzuführen.

4. Elektrisches Heizgerät nach Anspruch 1, **dadurch gekennzeichnet, dass** der Infrarot-Temperatursensor (6) eine PWM-Ausgangsfunktion der Ziel- und Raumtemperatur aufweist.

5. Elektrisches Heizgerät nach Anspruch 1, **dadurch gekennzeichnet, dass** der Infrarot-Temperatursensor (6) eine "Serienbus"-Ausgangsfunktion der Ziel- und Raumtemperatur aufweist.

6. Elektrisches Heizgerät nach Anspruch 1, **dadurch gekennzeichnet, dass** der Infrarot-Temperatursensor (6) mit einem Mikrocontroller der elektronischen Karte (4) verbunden ist, um eine Programmierung der Temperaturregelung durchzuführen.

7. Elektrisches Heizgerät nach Anspruch 1, **dadurch gekennzeichnet**, das mindestens ein Heizelement (2) aufweist, dessen Gang von einem Thermostat gesteuert wird.

8. Elektrisches Heizgerät (1) nach Anspruch 7, **dadurch gekennzeichnet, dass** das Thermostat im oberen Abschnitt des Heizgeräts montiert ist.
